Europäisches Patentamt

European Patent Office

Office européen des brevets

(19)

(11) Numéro de publication: **0 265 322 B1**

(12) **FASCICULE DE BREVET EUROPEEN**

(45) Date de publication de fascicule du brevet: **25.03.92**  (51) Int. Cl.⁵: **H02M 3/335**, H04N 5/63

(21) Numéro de dépôt: **87402255.1**

(22) Date de dépôt: **09.10.87**

(54) **Circuit de commande en mode veille d'une alimentation à découpage.**

(30) Priorité: **14.10.86 FR 8614259**

(43) Date de publication de la demande:
**27.04.88 Bulletin 88/17**

(45) Mention de la délivrance du brevet:
**25.03.92 Bulletin 92/13**

(84) Etats contractants désignés:
**DE GB IT NL**

(56) Documents cités:
**EP-A- 0 111 365**
**EP-A- 0 193 435**
**EP-A- 0 219 736**

(73) Titulaire: **SGS-THOMSON MICROELECTRO-NICS S.A.**
**7, Avenue Galliéni**
**F-94250 Gentilly(FR)**

(72) Inventeur: **Van Den Driesche, Michel**
**THOMSON-CSF SCPI 19, avenue de Messine**
**F-75008 Paris(FR)**

(74) Mandataire: **de Beaumont, Michel**
**1bis, rue Champollion**
**F-38000 Grenoble(FR)**

Rank Xerox (UK) Business Services

## Description

La présent invention concerne les alimentations stabilisées du type alimentations à découpage.

La présente invention concerne plus particulièrement un mode de réalisation de circuits de commande en mode veille d'alimentations à découpage. En effet, dans une application d'une alimentation à découpage à un téléviseur, un magnétoscope ou autre, on souhaite que cette alimentation puisse fonctionner dans un mode veille où seulement une très faible consommation est assurée pour permettre que l'appareil puisse se mettre en route instantanément à la suite de l'action par exemple d'une télécommande.

Classiquement pour un téléviseur, l'alimentation fournit normalement une puissance nominale de l'ordre de 40 à 160 watts. On souhaite que, dans le mode veille, l'alimentation fournisse une puissance très faible de l'ordre seulement de 0,5 à 10 watts pour alimenter seulement un microprocesseur, un récepteur de télécommande ou des mémoire et pour maintenir en charge les divers condensateurs de stockage prévus dans les circuits.

On souhaite que cette alimentation à découpage fonctionnant dans le mode veille ne soit pas audible et présente un rendement aussi bon que possible en ce qui concerne le rapport entre la puissance effectivement utilisée en mode veille et la puissance prise sur le secteur.

Si on fait fonctionner normalement l'alimentation à découpage en mode régulé en limitant seulement la puissance consommée, on s'aperçoit que l'on arrive inévitablement ou bien à une alimentation à découpage fonctionnant avec un très mauvais rendement ou bien à une alimentation à découpage fournissant des parasites audibles.

Pour résoudre ce problème, on en est arrivé dans l'art antérieur à utiliser un transformateur particulier pour alimenter les circuits de veille ce qui, comme cela est bien clair, augmente considérablement les coûts.

Le document EP-A-0 111 365 cite une circuit répandu utilisant une alimentation à découpage unique, dans lequel les tensions autres que celle qui alimente le récepteur de télécommande sont coupées, grâce à des commutateurs, pendant l'état de veille.

Avant de décrire la présente invention, on va d'abord décrire en détail le fonctionnement d'une alimentation à découpage particulière à laquelle peut s'appliquer la présente invention.

Un alimentation à découpage fonctionne de la manière suivante : un enroulement primaire de transformateur reçoit un courant qui est par exemple issu d'un pont de redresseurs recevant l'énergie du réseau alternatif. Le courant dans le transformateur est haché par un commutateur (par exemple un transistor de puissance) placé en série avec l'enroulement primaire.

Un circuit de commande du transistor établit des créneaux périodiques de mise en conduction du transistor. Pendant la durée du créneau le passage du courant est autorisé ; en dehors du créneau, le passage du courant est interdit.

Sur un (ou plusieurs) enroulement secondaire du transformateur, on recueille alors une tension alternative. Celle-ci est redressée et filtrée pour aboutir à une tension continue qui est la tension continue de sortie de l'alimentation à découpage.

Pour stabiliser la valeur de cette tension continue, on agit sur le rapport cyclique de conduction périodique du commutateur, c'est-à-dire sur le rapport entre la durée de conduction et la durée de blocage dans une période de découpage.

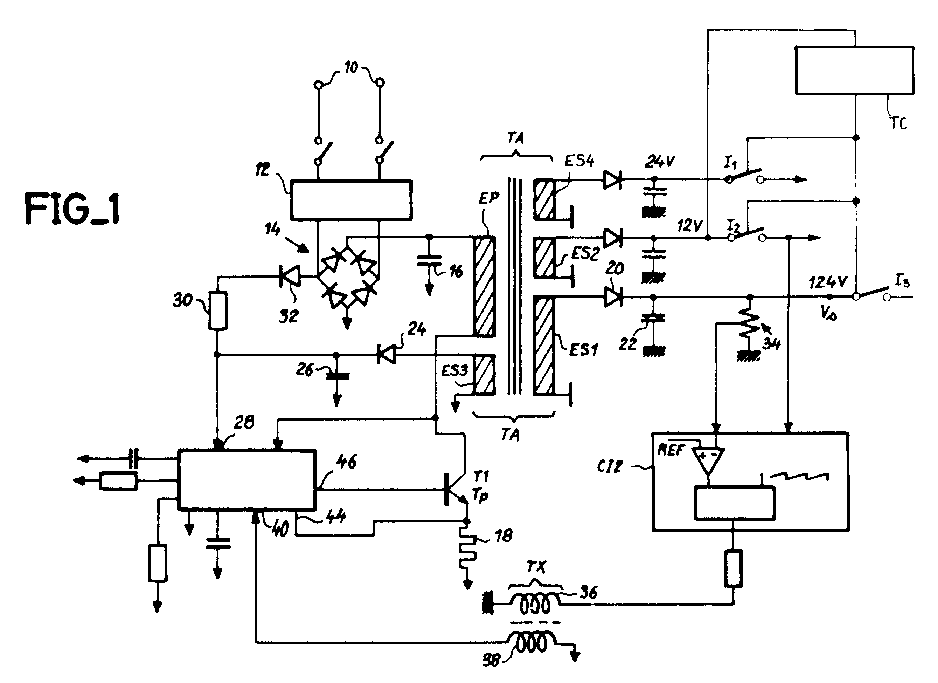

La figure 1 représente à titre d'exemple une architecture d'alimentation à découpage fabriquée par la Demanderesse, et qui est décrite dans la demande de brevet EP-A-193 435, dans laquelle deux circuits intégrés sont utilisés. L'un des circuits, CI1, sert à commander la base d'un transistor de puissance $T_P$ pour lui appliquer des signaux périodiques de commande de mise en conduction et de commande de blocage. Ce circuit de commande de base CI1 est placé du côté de l'enroulement primaire (EP) du transformateur (TA) pour des raisons que l'on comprendra mieux dans la suite de la description. L'autre circuit intégré, circuit de régulation CI2, est au contraire placé du côté du secondaire (enroulement ES1) et il sert à examiner la tension de sortie Vs de l'alimentation pour élaborer des signaux de régulation qu'il transmet au premier circuit intégré à travers un petit transformateur TX. Le premier circuit intégré CI1 mesure la tension de sortie régulée et modifie le rapport cyclique de mise en conduction du transistor de commutation $T_p$ pour contrôler la tension de sortie Vs de l'alimentation.

En figure 1, on a désigné la ligne du réseau public de distribution électrique par la référence 10 (secteur à 110 ou 220 volts, 50 ou 60 hertz). Cette ligne est reliée à travers un filtre 12 à l'entrée d'un pont redresseur 14 dont la sortie est connectée d'une part à une masse électrique primaire, représentée partout par un triangle noir pointe en bas, et d'autre part à une extrémité de l'enroulement primaire EP du transformateur d'alimentation TA.

Un condensateur de filtrage 16 est placé en parallèle sur les sorties du pont redresseur 14. L'autre extrémité de l'enroulement primaire est reliée au collecteur d'un transistor de commutation $T_p$ dont l'émetteur est relié à la masse primaire par l'intermédiaire d'une petite résistance 18 de mesure de courant.

Le transformateur posséde plusieurs enroulements secondaires qui sont de préférence isolés galvaniquement du secteur et reliés par exemple à une masse électrique secondaire isolée galvaniquement de la masse primaire.

Ici, chacun des enroulements secondaires a une extrémité reliée à la masse secondaire. L'autre extrémité alimente un condensateur de filtrage passe-bas 22 respectif par l'intermédiaire d'une diode de redressement respective 20.

On a représenté plus particulièrement les connexions de l'enroulement secondaire ES1. Mais, bien entendu, d'autres tensions continues de sortie peuvent être obtenues aux bornes des autres condensateurs de filtrage reliés aux enroulements secondaires. Ces tensions de sortie constituent des tensions d'alimentation stabilisées pour des circuits d'utilisation non représentés ici. A titre d'exemple, un enroulement secondaire ES2 fournit une tension d'alimentation stabilisée de quelques volts pour le circuit intégré de régulation CI2 dont on a déjà parlé.

Quand on veut passer en mode veille un récepteur de télécommande TC connecté directement à la sortie redressée d'un secondaire agit sur des interrupteurs $I_1$, $I_2$, $I_3$ pour ouvrir les circuits reliés aux sorties des redresseurs (20, 22) associés aux secondaires du transformateur. En ce cas également le circuit CI2 ne fonctionne plus et ne fournit plus de signaux de régulation au circuit CI1. Il faut néanmoins faire fonctionner à bas régime l'alimentation à découpage pour maintenir chargés les condensateurs 22 et alimenter le circuit TC.

Il en est de même a priori pour le circuit intégré CI1 de commande de base du transistor de puissance $T_p$, circuit qui est alimenté par une tension stabilisée fournie à partir d'un enroulement secondaire ES3, d'une diode 24 et d'un condensateur 26 (on remarquera en passant que cet enroulement, bien qu'étant un enroulement secondaire est relié à la masse primaire et non à la masse secondaire, ceci pour la raison bien simple que le circuit intégré CI1 est nécessairement couplé galvaniquement au primaire).

Cependant, comme il faut bien assurer un démarrage de l'alimentation à découpage, on prévoit que la borne d'alimentation 28 du circuit intégré CI1 est aussi reliée directement au secteur par l'intermédiaire d'une résistance élevée 30 et d'une diode 32 ; ceci est possible puisque le circuit intégré CI1 est relié à la masse primaire ; ce n'est pas possible pour le circuit CI2 qui doit rester galvaniquement isolé du secteur. Dès que l'alimentation à découpage fonctionne normalement, la tension continue stabilisée issue de l'enroulement ES3 et de la diode 24 prend le pas sur la tension issue du secteur et de la diode 32.

On va maintenant préciser le rôle des circuits intégrés CI1 et CI2.

Le circuit de régulation CI2 reçoit d'un pont diviseur 34, placé aux bornes du condensateur 22, c'est-à-dire en sortie de l'alimentation stabilisée, une information sur la valeur de la tension à stabiliser Vs.

Cette information est comparée à une valeur de consigne et appliquée à un modulateur de largeur d'impulsions qui établit des créneaux périodiques de largeur variable en fonction de la valeur de la tension de sortie Vs ; plus Vs est faible plus la largeur des créneaux sera grande.

Les créneaux sont établis à la fréquence de découpage de l'alimentation à découpage. Cette fréquence est don établie du côté du secondaire du circuit ; elle est engendrée soit à l'intérieur du circuit CI2, soit à l'extérieur dans un circuit non représenté, sous forme d'une tension en dent de scie à la fréquence de découpage choisie. Cette tension en dent de scie est utilisée de manière connue pour effectuer la modulation de largeur.

Les créneaux de largeur variable, à la fréquence de découpage, sont appliqués à un enroulement primaire 36 d'un petit transformateur TX dont l'enroulement secondaire 38, isolé galvaniquement du primaire, fournit des impulsions positives et négatives aux fronts montants et descendants, respectivement, des créneaux de largeur variable.

Ce sont ces impulsions, de position et de fréquence déterminées par le circuit de régulation CI2, qui constituent des signaux de régulation appliqués à une entrée 40 du circuit de commande de base CI1.

Le transformateur TX est constitué par quelques spires de bobinage enroulées sur un bâtonnet de ferrite, les spires du primaire et les spires du secondaire étant suffisamment écartées les unes des autres pour respecter les normes d'isolation galvanique entre circuits primaires et circuits secondaires de l'alimentation à découpage.

Le circuit intégré de commande de base CI1 comporte diverses entrées parmi lesquelles on a déjà mentionné une entrée d'alimentation 28 et une entrée de signaux de régulation 40 ; une entrée de mesure de courant 44 est reliée à la résistance de mesure de courant 18 ; une entrée d'inhibition permettant de surveiller l'état de magnétisation d'un transformateur. Enfin, des entrées peuvent être prévues pour connecter des éléments (résistances, capacités) qui devraient faire partie du circuit intégré lui-même mais qui pour des raisons technologiques (encombrement) ou pour des raisons pratiques (possibilités de réglage par l'utilisateur) sont montés à l'extérieur.

Le circuit intégré CI1 comporte enfin une sortie 46 qui est destinée à commander la base du transistor de puissance $T_p$. Cette sortie 46 fournit des créneaux de mise en conduction et de blocage du transistor $T_p$.

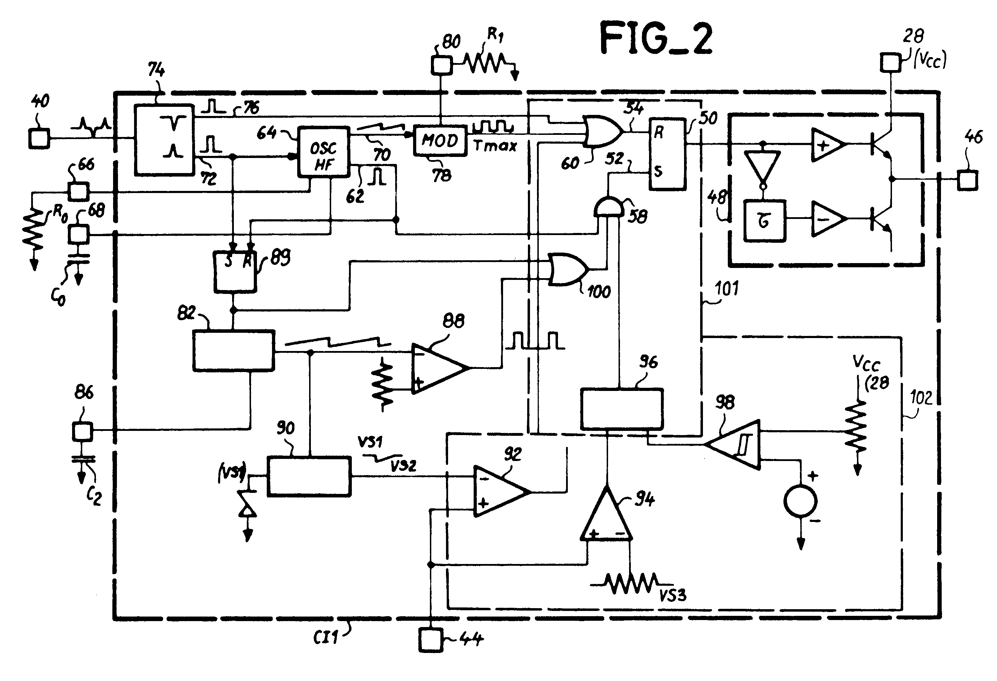

La figure 2 représente partiellement l'architecture générale du circuit intégré CI1.

La sortie 46 du circuit, destinée à la commande de base du transistor $T_p$, est la sortie d'un étage d'amplification push-pull globalement désigné par la référence 48, cet étage comprenant de préférence deux amplificateurs séparés dont l'un reçoit des créneaux de mise en conduction inversés et retardés de quelques microsecondes. De tels amplificateurs sont maintenant bien connus.

Les signaux de mise en conduction sont issus d'une bascule logique 50 ayant une entrée de basculement 52 et une entrée de rétablissement 54. L'entrée de basculement permet le déclenchement de la mise en conduction du transistor de puissance. L'entrée de rétablissement permet le déclenchement de l'arrêt de la conduction.

L'entrée de basculement 52 (S) reçoit les impulsions qui passent à travers une porte logique ET 58, de sorte que le déclenchement de la conduction ne se produit que si plusieurs conditions sont simultanément satisfaites ; une condition non satisfaite suffira à inhiber le déclenchement de la conduction.

L'entrée de rétablissement 54 (R) reçoit les impulsions qui passent à travers une porte logique OU 60, de sorte que l'arrêt de la conduction (après un déclenchement de conduction) se produira dès lors qu'un signal d'arrêt se présentera sur l'une des entrées de cette porte.

Sur le schéma de la figure 2, la porte ET 58 a trois entrées. L'une de ces entrées reçoit des impulsions périodiques issues d'une sortie 62 d'un oscillateur à haute fréquence 64 , les autres entrées servent à inhiber la transmission de ces impulsions.

L'oscillateur définit la périodicité du découpage de l'alimentation (20 kilohertz par exemple). En régime de fonctionnement normal l'oscillateur 64 est synchronisé par les signaux de régulation ; en régime de démarrage, il est auto-oscillant à une fréquence libre définie par les valeurs d'une résistance Ro et d'une capacité $C_o$ extérieures au circuit intégré CI1 et respectivement connectées à une borne d'accès 66 et une borne d'accès 68. La fréquence libre fo est en principe légérement plus faible que la fréquence de découpage normale.

L'oscillateur 64 est un oscillateur à relaxation qui produit sur une sortie 70 une dent de scie dont le retour à zéro est imposé par l'apparition d'une impulsion positive arrivant sur la borne 40. C'est pourquoi l'oscillateur 64 est représenté avec une entrée reliée à une sortie 72 d'un circuit de séparation et de mise en forme 74 qui reçoit les signaux de régulation de la borne 40 et les met en forme en séparant les impulsions positives des impulsions négatives. Le circuit de mise en forme 74 a deux sorties : 72 pour les impulsions positives, 76 pour les impulsions négatives (on gardera la notation impulsion positive, impulsion négative pour distinguer les impulsions de déclenchement de la conduction et les impulsions d'arrêt de la conduction même si le circuit de mise en forme établit des impulsions de même signe sur ses deux sorties 72 et 76).

L'oscillateur 64 a deux sorties : une sortie 70 fournissant une dent de scie et une sortie 62 fournissant une impulsion courte lors du retour à zéro de la dent de scie.

Un modulateur de largeur d'impulsions 78 est relié d'une part à la sortie 70 de l'oscillateur et d'autre part à une tension de référence ajustable par une résistance R1 extérieure au circuit intégré et reliée à une borne 80 d'accès au circuit. Le modulateur 78 fournit des créneaux périodiques synchronisés avec les signaux de l'oscillateur, ces créneaux définissant une durée maximale de conduction Tmax au delà de laquelle le blocage du transistor de puissance doit être déclenché de toute façon par sécurité. Ces créneaux de modulateur 78 sont appliqués à une entrée de la porte OU 60. La durée Tmax est réglable par la résistance extérieure R1.

Les éléments qui viennent d'être décrits assurent l'essentiel du fonctionnement en régime normal du circuit intégré CI1. Les éléments suivants sont plus spécifiquement prévus pour contrôler le fonctionnement anormal ou le démarrage de l'alimentation.

Un oscillateur à très basse fréquence 82 est relié à une capacité extérieure C2 par une borne d'accès 86. Cette capacité extérieure permet de régler la très basse fréquence d'oscillation. La fréquence peut être de 1 hertz par exemple.

L'oscillateur 82 est un oscillateur à relaxation fournissant une dent de scie. Cette dent de scie est appliquée d'une part à un comparateur à seuil 88 qui permet d'établir des créneaux périodiques synchronisés sur la dent de scie à très basse fréquence de l'oscillateur. Ces créneaux ont une durée brève devant la période de la dent de scie : cette durée est fixée par le seuil du comparateur 88 ; elle peut être par exemple de 10 % de la période ; elle doit être longue devant la période libre d'oscillation de l'oscillateur haute fréquence 64 de manière qu'une salve de nombreuses impulsions de l'oscillateur haute fréquence puisse être émise et utilisée pendant ces 10 % de la période à très basse fréquence ; cette salve définit une tentative de démarrage pendant la première partie d'un cycle de démarrage ; elle est suivie d'une pause pendant le reste de la période c'est-à-dire pendant les 90 % restants.

L'oscillateur 82 ne sert qu'au démarrage ; il est inhibé lorsque des signaux de régulation apparaissent sur la borne 40 et indiquent que l'alimentation à découpage fonctionne. C'est pourquoi on a représenté une commande d'inhibition de cet oscillateur, relié à la sortie 72 du circuit de mise en forme 74 par l'intermédiaire d'une bascule bistable 89. Cette bascule change d'état sous l'action des impulsions apparaissant sur la sortie 72. Elle est ramenée à son état initial par la sortie 62 de l'oscillateur 64 lorsqu'il n'y a plus d'impulsions sur la sortie 71.

Les dents de scie de l'oscillateur à très basse fréquence sont par ailleurs transmises à un circuit 90 d'élaboration de seuil variable qui a pour fonction d'établir un signal de seuil (courant ou tension) ayant une première valeur Vsl en régime de fonctionnement normal, et un seuil cycliquement variable entre la première valeur et une deuxième valeur en régime de démarrage.

Le signal de seuil établi par le circuit 90 est appliqué à une entrée d'un comparateur 92 dont une autre entrée est reliée à la borne 44 déjà mentionnée, pour recevoir sur cette entrée un signal représentatif de l'amplitude du courant traversant le commutateur de puissance. La sortie du comparateur 92 est appliquée à une entrée de la porte OU 60. Elle agit donc pour déclencher le blocage du transistor de puissance $T_p$,après un déclenchement de conduction, le blocage se produisant dès la détection du dépassement du seuil (fixe ou variable) défini par le circuit 90.

Un autre comparateur à seuil 94 a une entrée reliée à la borne 44 de mesure de courant tandis qu'une autre entrée reçoit un signal représentant une troisième valeur de seuil Vs3. La troisième valeur Vs3 correspond à un courant dans le commutateur plus élevé que la première valeur Vs1 définie par le circuit 90. La sortie du comparateur 94 est reliée à travers une bascule de mémorisation 96 à une entrée de la porte ET 58 de sorte que si le courant dans le commutateur de puissance dépasse la troisième valeur de seuil Vs3, on ne déclenche pas un arrêt de la conduction du transistor $T_p$ (cet arrêt est déclenché par le comparateur 92) mais une inhibition de toute remise en conduction du transistor. Cette inhibition dure jusqu'à ce que la bascule 96 soit remise dans son état initial correspondant à un fonctionnement normal.

En principe ce rétablissement n'aura lieu que lorsque le circuit intégré CI1 aura cessé d'être alimenté normalement en énergie et sera à nouveau remis sous tension. Par exemple, le rétablissement de la bascule 96 se fait par l'intermédiaire d'un comparateur à seuil à hystérésis 98 qui compare une fraction de la tension d'alimentation Vcc du circuit (prélevée sur la borne 28) à une valeur de référence et qui rétablit la bascule lors du premier passage de Vcc au-dessus de cette référence après une chute de Vcc au-dessous d'une autre valeur de référence plus faible que la première (hystérésis).

Enfin, on peut préciser que la sortie de la bascule bistable 89 (qui détecte la présence de signaux de régulation sur la borne 40 donc le fonctionnement normal de l'alimentation), est reliée à une entrée d'une porte OU 100 qui reçoit sur une autre entrée la sortie du comparateur 88 pour que la sortie du comparateur 88 cesse d'inhiber la remise en conduction du transistor $T_p$ (inhibition pendant 90 % des cycles à très basse fréquence) dès que le fonctionnement de l'alimentation est devenu normal.

## FONCTIONNEMENT DU CIRCUIT A LA MISE SOUS TENSION

Au départ le circuit intégré n'est pas alimenté.

La tension sur la borne d'alimentation 28 croît de zéro à une valeur Vaa qui n'est pas la valeur nominale Vcc mais qui est une valeur plus faible fournie par la diode 32 et la résistance 30 (cf. figure 1) tant que l'alimentation à découpage ne fournit pas sa tension nominale de sortie Vcc sur la borne 28. Vaa est une tension suffisante pour assurer un fonctionnement pratiquement normal de tous les éléments du circuit CI1. Vaa est également suffisante pour réinitialiser la bascule 96 qui, dès lors, n'inhibe plus la mise en conduction du transistor de puissance $T_p$.

Il n'y a pas de signaux de régulation sur l'entrée 40. Par conséquent, l'oscillateur haute fréquence oscille avec sa fréquence libre et l'oscillateur à très basse fréquence oscille également (il n'est pas inhibé par la bascule bistable 89 puisque celle-ci ne reçoit pas de signaux de régulation de la sortie 72 du circuit de mise en forme 74).

L'oscillateur très basse fréquence 82 et le comparateur 88 définissent des cycles périodiques de tentatives de démarrage répétées à très basse fréquence.

Chaque cycle comprend une première partie définie par les créneaux de courte durée en sortie du comparateur 88, et une deuxième partie constituée par la fin de la période très basse fréquence ; la première partie est une tentative effective de démarrage. La deuxième partie est une pause si la tentative effective a échoué. La pause dure beaucoup plus longtemps que la tentative effective de manière à limiter la consommation de puissance.

Pendant la première partie du cycle, le passage des signaux de mise en conduction issus de l'oscillateur haute fréquence 64 est autorisé par la porte ET 58. Il est interdit ensuite. Chaque impulsion issue de la sortie 62 de l'oscillateur 64 déclenche la mise en conduction du transistor $T_p$. Il y a donc une salve d'impulsions de déclenchement qui est émise pendant 10% environ de la période à très basse fréquence.

Pendant le démarrage, les intensités de courant dans le transistor ont tendance à être élevées. C'est le comparateur 92 essentiellement qui assure l'interruption de la conduction, après chaque impulsion de mise en conduction fournie par l'oscillateur 64, dès que le courant dépasse le seuil imposé par le circuit d'élaboration de seuil variable 90. Si le comparateur 92 ne déclenche pas l'interruption de la conduction, le modulateur 78 le fera de toutes façons au bout de la durée Tmax.

Le circuit d'élaboration de seuil qui fournit au comparateur 90 une première valeur de seuil fixe Vs1 en régime normal (c'est-à-dire lorsque l'oscillateur à très basse fréquence 82 est bloqué par la bascule 89), fournit un seuil variable en fonction de la dent de scie de l'oscillateur très basse fréquence de la manière suivante :

- à l'instant initial d'un cycle de tentative de démarrage (départ de la dent de scie ou retour à zéro de la précédente dent de scie), le seuil passe brusquement de la première valeur Vs1 à une deuxième valeur Vs2 correspondant à un courant plus faible que pour la première valeur, puis ce seuil croît progressivement (grâce au pilotage par la dent de scie très basse fréquence) de la deuxième valeur jusqu'à la première. La durée de croissance coïncide de préférence avec la durée d'un créneau de tentative de démarrage (soit environ 10% de la période très basse fréquence).

- ensuite, le seuil se stabilise à la première valeur Vs1 jusqu'à la fin de la période, mais de toutes façons, si le circuit n'a pas démarré à ce moment là, le comparateur 88 ferme la porte 58, à travers la porte OU 100, et inhibe tout déclenchement ultérieur de conduction du transitor de puissance pendant le reste de la période très basse fréquence (90%). C'est alors la deuxième partie du cycle de tentatives de démarrages qui a lieu : pause pendant laquelle les impulsions de l'oscillateur 64 ne sont pas transmises par la porte ET 58.

Ainsi les cycles de démarrage agissent sur deux plans : d'une part une salve d'impulsions de mise en conduction est émise (10% du temps) puis arrêtée (90% du temps) jusqu'au cycle suivant, d'autre part, pendant cette salve, le seuil de limitation de courant passe progressivement de sa deuxième valeur relativement basse à sa valeur normale plus haute.

Par conséquent, si l'on observe l'amplitude crête du courant dans le transistor $T_p$ pendant les salves de démarrage, on voit que pratiquement elle croît linéairement. On obtient donc un démarrage progressif par une action beaucoup plus efficace que celle qui consisterait simplement par exemple à faire croître la durée Tmax d'une faible valeur à une valeur nominale.

Si le démarrage ne réussit pas, une nouvelle salve d'impulsions de mise en conduction est transmise lors de la première partie du cycle suivant (on rappelle que ce cycle se répète environ une fois par seconde et que la salve peut durer 100 millisecondes).

Si le démarrage réussit, des signaux de régulation apparaissent sur la borne 40. Ces signaux sont mis en forme par le circuit 74. Ils viennent arrêter l'oscillateur très basse fréquence 82 par la bascule 89 qui empêche le retour à zéro de la dent de scie. Par ailleurs, la bascule 89 envoie à travers la porte OU 100 un signal propre à annuler l'effet d'inhibition imposé par le comparateur 88. Enfin, dès que le démarrage a réussi, les signaux de régulation viennent synchroniser l'oscillateur haute fréquence 64.

OBJET DE L'INVENTION

Ayant rappelé ci-dessus le fonctionnement d'un circuit particulier d'alimentation à découpage adapté pour fonctionner en mode salve au démarrage, la présente invention prévoit d'utiliser un concept du même type pour assurer un fonctionnement en mode veille tout en maintenant possible le fonctionnement au démarrage énoncé précédemment.

La présente invention vise également à prévoir un tel dispositif qui soit exempt de tout parasite audible.

Pour atteindre ces objets, la présente invention prévoit que le fonctionnement en mode salve décrit précédemment peut être automatiquement commuté dans l'un ou l'autre de deux modes particuliers selon que l'on se trouve dans un état de démarrage ou un état de veille.

Le démarrage, comme l'état de veille, se caractérise par l'absence de signaux de synchronisation en provenance du circuit intégré CI2. Toutefois, on ne peut utiliser à l'état de veille les impulsions prévues pour la commande au démarrage. En effet, au démarrage il est nécessaire de fournir une puissance relativement importante à l'alimentation à découpage pour mettre rapidement en charge tous les divers condensateurs de stockage existant notamment au niveau des redresseurs des secondaires du transformateur de l'alimentation à découpage.

Par contre, quand on se trouve à l'état de veille, tous ces condensateurs sont déjà chargés et il faut simplement maintenir la charge et alimenter le circuit de réception de télécommande ou autre microprocesseur.

Ainsi, la présente invention prévoit une détection automatique du fait que la tension d'alimentation vers le circuit est en cours d'établissement (phase de démarrage) ou qu'elle est déjà établie (état de veille), tandis que les impulsions de régulation ne sont pas fournies au système.

Ces objets, caractéristiques et avantages ainsi que d'autres de la présente invention seront exposés plus en détail dans la description suivante d'un mode de réalisation détaillé faite en relation avec les figures jointes parmi lesquelles :

les figures 1 et 2 illustrent une alimentation de découpage de l'art antérieur et ont été décrites précédemment ; et

la figure 3 représente un circuit suivant la présente invention.

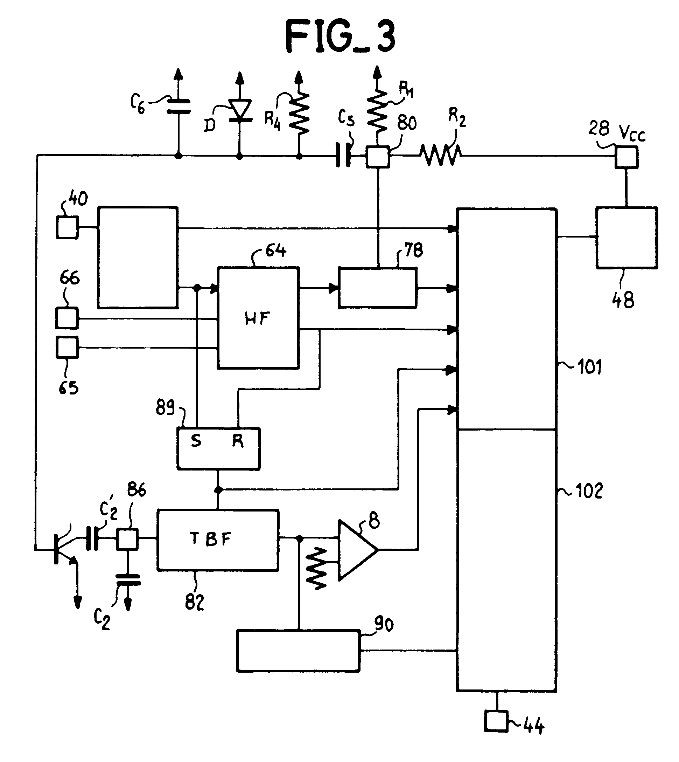

Dans la figure 3, les mêmes composants que ceux de la figure 1 ont été représentés sous les mêmes références. Toutefois, par souci de simplification, l'ensemble des composants 50, 54, 58, 96 et 100 ont été groupés dans un bloc unique désigné par la référence 101 et correspondant de façon générale à une logique de commande, et les éléments 92, 94 et 98 ont pour leur part été groupés dans un bloc unique 102 appelé circuit de sécurité.

Le circuit selon la présente invention est connecté aux bornes 28, 80 et 86 précédemment décrites. A la borne 81, on retrouve la résistance R1 connectée à la masse et une résistance R2 non décrite précédemment connectée à la borne d'alimentation Vcc. La borne 86 est comme précédemment connectée par un condensateur C2 à la masse. Elle est également reliée à la masse par la combinaison série d'un condensateur C'2 et de la liaison collecteur/émetteur d'un transistor T5 dont la base est connectée d'une part à la borne 80 par l'intermédiaire d'un condensateur C5, d'autre part à la masse par l'intermédiaire de la liaison parallèle d'un condensateur C6, d'une diode D et d'une résistance R4.

En phase de démarrage, Vcc croît de zéro à une valeur proche de sa valeur nominale. Pendant la durée définie par la constante de temps associée aux résistances en série R2 et R4 et au condensateur C5, le transistor T5 conduit. Le condensateur C'2 est alors en parallèle avec le condensateur C2 et fournit une salve au démarrage de période suffisamment longue pour fournir l'énergie de démarrage. De même, le courant à la borne 80 qui définit la durée de chaque impulsion de salve est plus important et va engendrer une durée d'impulsions élémentaires plus longue.

Si, une fois le système mis en route, on actionne le dispositif de télécommande pour faire passer le système en mode veille, la borne 40 cesse de recevoir des impulsions de régulation et l'oscillateur TBF 82 se met en fonctionnement. Mais, cette fois-ci le condensateur C5 n'est pas conducteur et la durée de conduction de chaque impulsion sera fixée par R1 et R2. On notera en plus avec ce système qu'on obtient une régulation de la puissance disponible du fait que la résistance R2 est liée à la tension d'alimentation Vcc et fait donc varier la durée de conduction de chaque impulsion de manière inversement proportionnelle à Vcc. C'est-à-dire que si Vcc augmente la durée de conduction diminue et inversement.

L'homme de l'art notera qu'au lieu de faire varier la durée de conduction de chaque impulsion, on aurait pu choisir de faire varier la durée d'une salve d'une façon inversement proportionnelle à Vcc.

En outre, pour éviter tout parasite acoustique, on poura prévoir d'augmenter en mode veille la fréquence de l'oscillateur BF 82. En effet, la fréquence de cet oscillateur, dérivée de la fréquence ligne, est classiquement voisine de 14 kHz et un train d'impulsions brèves à cette fréquence pourrait être audible pour une oreille particulièrement sensible. Dans ce but, on ajoute à la sortie de la bascule SR 89 un détecteur de mode (une autre bascule) qui commande une augmentation de fréquence de l'oscillateur 82 en mode veille, vers une fréquence environ 30% plus élevée. Ceci peut être effectué, par exemple en commandant l'insertion d'une résistance supplémentaire dans le circuit résonant de l'oscillateur 82.

## Revendications

1. Circuit de commande en mode veille d'une alimentation à découpage comprenant un commutateur principal ($T_P$) disposé au primaire d'un transformateur (TA) relié à la tension du réseau redressée, ce primaire étant connecté à un premier ensemble de circuits fournissant des signaux de commutation audit commutateur principal, ce transformateur comprenant une pluralité de secondaires reliés, par l'intermédiaire de redresseurs, à des circuits d'utilisation et à un second ensemble de circuits comprenant des moyens pour fournir des signaux de commande de régulation au premier ensemble de circuits, des interrupteurs commandés (I1, I2, I3) étant disposés aux secondaires du transformateur (TA), caractérisé en ce qu'il comprend :

- un circuit de commande de veille (TC) connecté en permanence à un secondaire (ES4) du transformateur pour, à l'état de veille, ouvrir lesdits interrupteurs commandés pour interrompre le passage du courant dans les circuits d'utilisation et dans le second ensemble de circuits, et
- des premiers moyens compris dans le premier ensemble de circuits, pour fournir au commutateur principal des salves de signaux en impulsions, ces salves étant espacées d'une durée longue devant la durée de chaque salve, et alimenter ainsi seulement ledit circuit de commande et lesdits redresseurs aux secondaires du transformateur.

2. Circuit d'alimentation à découpage, destiné à recevoir des signaux de commande de régulation périodiques et à produire des créneaux périodiques de mise en conduction d'un commutateur principal (T$_p$) de l'alimentation, les créneaux ayant une largeur variable en fonction des signaux de commande de régulation, comportant :

- un moyen de détection de la présence de signaux de commande de régulation (74, 89),
- un oscillateur à très basse fréquence (82) commandé par le moyen de détection, cet oscillateur établissant, en cas d'abscence de signaux de régulation, une succession de cycles périodiques à très basse fréquence, l'oscillateur étant inhibé par le moyen de détection de signaux de commande de régulation,
- un oscillateur à fréquence élevée (64) produisant des signaux de découpage palliant l'absence de signaux de régulation pour la production de créneaux de mise en conduction, associé à un circuit de modulation (78) pour régler la durée de chaque impulsion,
- un moyen d'inhibition (88) pour n'autoriser la transmission de salves de signaux de découpage vers le commutateur que pendant une première phase de chaque cycle périodique à très basse fréquence et pour interdire cette transmission pendant le reste du cycle, la première phase de chaque cycle ayant une durée longue devant la période de l'oscillateur à fréquence élevée et courte devant la période de l'oscillateur à très basse fréquence,

caractérisé en ce qu'il comprend des moyens (R1, R2, T5, C2, C'2) pour modifier la durée de conduction selon que le circuit est en phase de démarrage ou à l'état de veille.

3. Circuit selon la revendication 2, caractérisé en ce que la borne de constante de temps (86) de l'oscillateur très basse fréquence (82) est connectée à la masse par l'intermédiaire d'un premier condensateur (C2) et d'un deuxième condensateur (C'2) en parallèle avec le premier connecté à la masse par un interrupteur commandé (T5) et rendu passant seulement quand la tension d'alimentation (Vcc) du circuit est en cours d'établissement (phase de démarrage).

4. Circuit selon la revendication 2, caractérisé en ce qu'il comprend des moyens pour augmenter la fréqence de l'oscillateur très basse fréquence quand un mode veille est détecté.

5. Circuit selon la revendication 3, caractérisé en ce que la borne d'alimentation du circuit de modulation (78) est connectée à la tension d'alimentation (Vcc) par un pont diviseur (R1, R2), d'où il résulte que la durée de chaque impulsion est inversement proportionnelle à la tension d'alimentation.

## Claims

1. A circuit for controlling in a standby mode a switching supply comprising a main switch (T$_p$) disposed at the primary of a transformer (TA) connected to the rectified mains voltage, said primary being connected to a first assembly of circuits providing switching signals to said main switch, the transformer comprising a plurality of secondaries connected, through rectifiers, to load circuits and to a second assembly of circuits comprising means for providing regulation control signals to the first assembly of circuits, controlled switches (I1, I2, I3) being disposed at the secondaries of said transformer (TA), comprising:

- a standby control circuit (TC) permanently connected to a secondary (ES4) of said transformer for, during the standby state, opening said controlled switches to interrupt current flowing in the load circuits and in the second circuit assembly, and
- first means comprised in the first assembly of circuits, for supplying to the main switch bursts of signal pulses, said bursts being separated by a long time interval with respect to the period of each burst, and thus supplying only said control circuit and said rectifiers at the secondaries of the transformer.

2. A switching power supply circuit designed to receive periodic regulation control signals and to provide periodic square pulses for switching on a main power supply switch (T$_P$), the square pulses having a width variable as a function of the regulation control signals, comprising:

- means for detecting the presence of the regulation control signals (74, 89),
- a very low frequency oscillator (82) controlled by the detection means, said oscillator establishing, in case of absence of regulation signals, a series of very low frequency periodic cycles, said oscillator being inhibited by the means for detecting the regulation control signals,

- a high frequency oscillator (64) providing switching signals palliating the absence of regulation signals for providing switching on square pulses, said oscillator being associated with a modulation circuit (78) for setting the duration of each pulse,

- inhibiting means (88) for allowing transmission of bursts of switching signals to the switch only during a first phase of each very low frequency periodic cycle and for inhibiting this transmission during the remaining of the cycle, the first phase of each cycle having a long time duration with respect to the period of the high frequency oscillator and a short duration with respect to the period of the very low frequency oscillator,

characterized in that it comprises means (R1, R2, T5, C2, C'2) for modifying the conduction duration depending on whether the circuit is in start-up or standby state.

3. A circuit according to claim 2, wherein the time constant terminal (86) of the very low frequency oscillator (82) is grounded through a first capacitor (C2) and second capacitor (C'2) in parallel with the first one connected to ground through a controlled switch (T5), and rendered conductive only when the supply voltage (Vcc) of the circuit is being established (start-up phase).

4. A circuit according to claim 2, comprising means for increasing the frequency of the very low frequency oscillator when a standby mode is detected.

5. A circuit according to claim 3, wherein the power supply terminal of the modulation circuit (78) is connected to the supply voltage (Vcc) by a dividing bridge (R1, R2), whereby the interval between each pulse is inversely proportional to the supply voltage.

**Patentansprüche**

1. Schaltung zum Steuern im Bereitschaftsmodus einer Schalt-Energieversorgung mit einem Hauptschalter (TP) auf der Primärseite eines Transformators (TA), der an die Spannung eines gleichgerichteten Netzwerks angeschlossen ist, wobei die Primärseite an eine erste Schaltungsanordnung angeschlossen ist, die Schaltsignale an den Hauptschalter abgibt, wobei der Transformator eine Vielzahl Sekundärseiten umfaßt, die über Gleichrichter an Verbraucherschaltungen und an eine zweite Schaltungsanordnung angeschlossen sind, die eine Einrichtung zum Abgeben von Regelschaltsignalen an die erste Schaltungsanordnung umfaßt, wobei gesteuerte Schalter (I1, I2, I3) auf den Sekundärseiten des Transformators (TA) angeordnet sind, dadurch **gekennzeichnet,** daß die Schaltung folgendes umfaßt:

- eine Bereitschaftssteuerschaltung (TC), die immer mit einer Sekundärseite (ES4) des Transformators verbunden ist, um im Bereitschaftszustand die gesteuerten Schalter zu öffnen, um den Stromfluß in den Verbraucherschaltungen und in der zweiten Schaltungsanordnung zu unterbrechen, und

- eine erste Einrichtung in der ersten Schaltungsanordnung zum Abgeben von Signalpulszügen an den Hauptschalter, wobei die Züge durch im Hinblick auf die Länge eines jeden Zuges große Abstände voneinander getrennt sind, und zum somit Versorgen nur der Steuerschaltung und der Gleichrichter auf den Sekundärseiten des Transformators.

2. Schaltung einer Schalt-Energieversorgung, die dazu ausgelegt ist, periodische Regelsteuersignale zu empfangen und periodische Rechteckimpulse zu erzeugen, um einen Hauptversorgungsschalter (TP) einzuschalten, wobei die Rechteckimpulse eine Große haben, die abhängig von den Regelsteuersignalen variabel ist, umfassend:

- eine Einrichtung zum Erfassen der Anwesenheit von Regelsteuersignalen (74, 89),

- einen Oszillator mit sehr niedriger Frequenz (82), der von der Einrichtung zum Erfassen gesteuert ist, wobei der Oszillator bei Abwesenheit der Regelsignale eine Folge von periodischen Zyklen mit sehr geringer Frequenz schafft, wobei der Oszillator von der Einrichtung zum Erfassen der Regelsteuersignale gehemmt wird,

- einen Oszillator (64) mit hoher Frequenz, der Schaltsignale erzeugt, welche die Abwesenheit der Regelsignale beheben, und zwar zum Erzeugen der Rechteckimpulse zum Einschalten, zugeordnet einer Modulationsschaltung (78) zum Regeln der Dauer eines jeden Impulses,

- eine Hemmeinrichtung (88) zum Freigeben der Übertragung der Schaltsignalpulszüge an den Schalter nur während einer ersten Phase eines jeden periodischen Zyklus mit sehr geringer Frequenz und zum Unterbinden der Übertragung in dem restlichen Zyklus, wobei die erste Phase eines jeden Zyklus eine Dauer hat, die lang ist im Vergleich mit der Periode des Oszillators mit hoher Frequenz, und kurz im Vergleich mit der Periode des Oszillators mit sehr niedriger Frequenz,
**gekennzeichnet** durch eine Einrichtung (R1, R2, T5, C2, C'2) zum Modifizieren der Einschaltdauer in Abhängigkeit davon, ob die Schaltung sich in der Anlauf- oder der Bereitschaftsphase befindet.

3. Schaltung nach Anspruch 2, dadurch **gekennzeichnet,** daß der Zeitkonstanten-Anschluß (86) des Oszillators (82) mit sehr niedriger Frequenz über einen ersten Kondensator (C2) und über einen zweiten Kondensator (C'2) an Masse liegt, der parallel zu dem ersten Kondensator über einen gesteuerten Schalter (T5) an Masse liegt, und nur dann leitend ist, wenn die Versorgungsspannung (Vcc) der Schaltung aufgebaut wird (Anlaufphase).

4. Schaltung nach Anspruch 2, dadurch **gekennzeichnet,** daß sie eine Einrichtung zum Erhöhen der Frequenz des Osziilators mit sehr niedriger Frequenz umfaßt, wenn ein Bereitschaftszustand erfaßt wird.

5. Schaltung nach Anspruch 3, dadurch **gekennzeichnet,** daß der Versorgungsanschluß der Modulationsschaltung (78) an die Versorgungsspannung (Vcc) über eine Teilerbrücke (R1, R2) angeschlossen ist, wodurch die Dauer jedes Impulses umgekehrt proportional zu der Versorgungsspannung ist.

FIG_1

EP 0 265 322 B1

FIG_2

# FIG_3